# FASCICULE DE BREVET EUROPEEN

(11) **EP 2 519 132 B1**
(45) Date de publication et mention de la délivrance du brevet: **09.07.2014**
(21) Numéro de dépôt: 10807712.4
(22) Date de dépôt: 27.12.2010
(51) Int. Cl.: A47J 45/07

(54) **POIGNEE AMOVIBLE**
ENTFERNBARER GRIFF
REMOVABLE HANDLE

(30) Priorité: 31.12.2009 FR 0959686
(43) Date de publication de la demande: 07.11.2012
(73) Titulaire: Seb S.A., 69130 Ecully (FR)
(72) Inventeur: MONTGELARD, Michel, 73100 Aix Les Bains (FR)
(74) Mandataire: Novagraaf Technologies
(86) Numéro de dépôt international: PCT/FR2010/052924
(87) Numéro de publication internationale: WO 2011/080482

(56) Documents cités:
- EP-A1- 1 378 195
- US-A- 3 232 657
- US-A1- 2008 110 910
- US-B1- 6 318 776

## Description

La présente invention concerne une poignée amovible pour article culinaire, l'article culinaire tel qu'une casserole, ayant une paroi latérale qui est prolongée vers le haut par une portion recourbée vers l'extérieur.

On connaît de nombreuses poignées pour articles culinaires, du type comprenant une mâchoire interne et une mâchoire externe adaptées à venir contre, respectivement, les surfaces interne et externe de la paroi latérale de l'article culinaire, les deux mâchoires étant mobiles l'une par rapport à l'autre entre une position ouverte et une position fermée dans laquelle elles pincent la paroi latérale.

Une telle poignée est décrite dans le document US 2008/110910 et comprend également des moyens d'actionnement des mâchoires, ces moyens pouvant être variés et, en général, leur conception est liée à une amélioration de l'ergonomie.

De plus, certaines poignées ont des caractéristiques techniques permettant de résoudre des problèmes techniques particuliers, par exemple : empêcher une ouverture soudaine et imprévue des mâchoires malgré la nature stable de leur position fermée, pouvoir pincer des parois latérales d'articles culinaires d'épaisseur différentes, maintenir les mâchoires immobiles en position fermée ajustée à l'épaisseur de la paroi latérale de l'article culinaire.

Cependant, toutes ces poignées présentent l'inconvénient de présenter un jeu rotatif selon l'axe longitudinal du corps de préhension de la poignée.

La présente invention vise à réaliser une poignée dont le jeu rotatif relatif du récipient par rapport à la poignée selon l'axe correspondant à la direction longitudinale de la poignée soit considérablement réduit, voire annulé.

Selon l'invention, la mâchoire externe de la poignée du type précité comporte une rainure adaptée à recevoir en butée l'extrémité libre de la portion recourbée de la paroi latérale de l'article culinaire quand les mâchoires sont dans leur position fermée.

De cette façon, les zones de contact entre la poignée et l'article culinaire sont au moins au nombre de trois : une première entre la surface intérieure de la paroi latérale et la mâchoire interne de la poignée, une seconde entre la surface extérieure de la paroi latérale et la mâchoire externe de la poignée, et une troisième entre l'extrémité libre de la portion recourbée prolongeant la paroi latérale et la rainure réalisée dans la mâchoire externe de la poignée. Les deux premières zones de contact sont typiquement alignées sur une verticale, et la troisième est généralement étendue sur une surface horizontale.

Du fait de la présence de trois zones de contact (non alignées), le jeu entre l'article culinaire et la poignée est fortement réduit, voire nul.

D'autres particularités et avantages de la présente invention apparaîtront dans le mode de réalisation donné à titre d'exemple non limitatif et illustré dans les dessins mis en annexe dans lesquels :
La figure 1 est une vue en coupe de la partie avant d'une poignée conforme à la présente invention pinçant un ustensile culinaire ; et

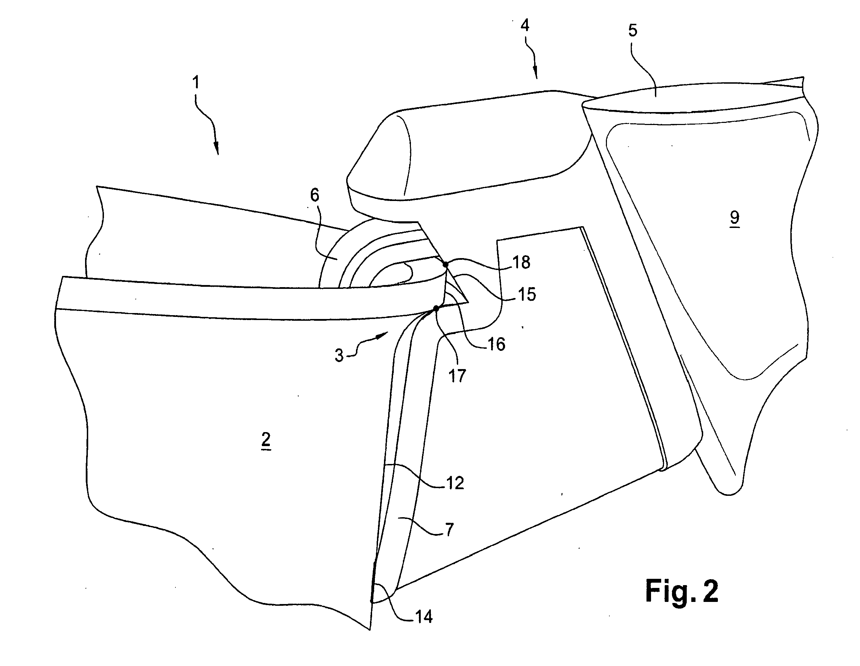

La figure 2 est une vue en perspective correspondant à la figure 1.

De façon classique, un article culinaire 1 comprend une paroi de fond horizontale, une paroi latérale 2 se dressant depuis la paroi de fond, et une portion recourbée 3 qui est recourbée vers l'extérieur, qui prolonge la paroi latérale 2, qui délimite l'ouverture supérieure de l'article culinaire 1 et qui forme l'extrémité supérieure de ce dernier.

Parallèlement, une poignée amovible 4 comprend un corps de préhension 5 qui sert de manche et qui permet à un utilisateur de la saisir, et deux mâchoires 6, 7 qui sont mobiles l'une par rapport à l'autre entre une position ouverte permettant de disposer la paroi latérale 2 entre les mâchoires 6, 7, et une position fermée dans laquelle les mâchoires 6, 7 pincent la paroi latérale 2. La poignée amovible 4 comprend également des moyens d'actionnement 8 qui sont déplaçables par l'utilisateur et entraînent le déplacement relatif des deux mâchoires 6, 7. Ici, ces moyens 8 sont mobiles entre une position d'ouverture dans laquelle les mâchoires 6, 7 sont dans leur position ouverte, et une position de fermeture dans laquelle les mâchoires 6, 7 sont dans leur position fermée. Plus précisément, dans le présent exemple, les moyens d'actionnement comprennent un levier 9 qui est monté en rotation sur le corps de préhension 5 et une bielle 10 qui est montée en pivotement, d'une part, au levier 9, et, d'autre part, à une l'une des mâchoires qui est mobile.

Les deux mâchoires 6, 7 sont formées par une mâchoire interne 6 qui est adaptée à venir contre la surface intérieure 11 de la paroi latérale 2 de l'article culinaire 1, et une mâchoire externe 7 qui est adaptée à venir contre la surface extérieure 12 de cette même paroi 2. Ainsi, quand les mâchoires 6, 7 sont en position fermée, elles sont en contact avec la paroi latérale 2, de part et d'autre de cette dernière. De façon plus précise, chaque mâchoire 6, 7 comprend une surface de serrage 13, 14 qui est la partie de la mâchoire 6, 7 adaptée à venir en contact avec la paroi latérale 2 de l'article culinaire 1.

Dans le présent mode de réalisation, la mâchoire externe 7 est montée de façon fixe sur le corps de préhension 5, et la mâchoire interne 6 est montée mobile par rapport à ce dernier (en l'occurrence, la mâchoire interne 6 est montée en translation sensiblement selon la direction longitudinale du corps de préhension 5 et, ici, elle est reliée à la bielle 10).

Conforment à la présente invention, la mâchoire externe 7 comporte une rainure 15 qui est adaptée, quand les mâchoires 6, 7 sont dans leur position fermée, à recevoir en butée l'extrémité libre 16 de la portion recourbée 3. De façon plus précise, cette rainure 15 est disposée au-dessus de la surface de serrage 14 de la mâchoire externe 7. Dans le présent exemple, la rainure 15 est située entre 10 et 15 mm de la surface de serrage 13 de la mâchoire interne 6, et entre 20 et 25 mm de la surface de serrage 14 de la mâchoire externe 7.

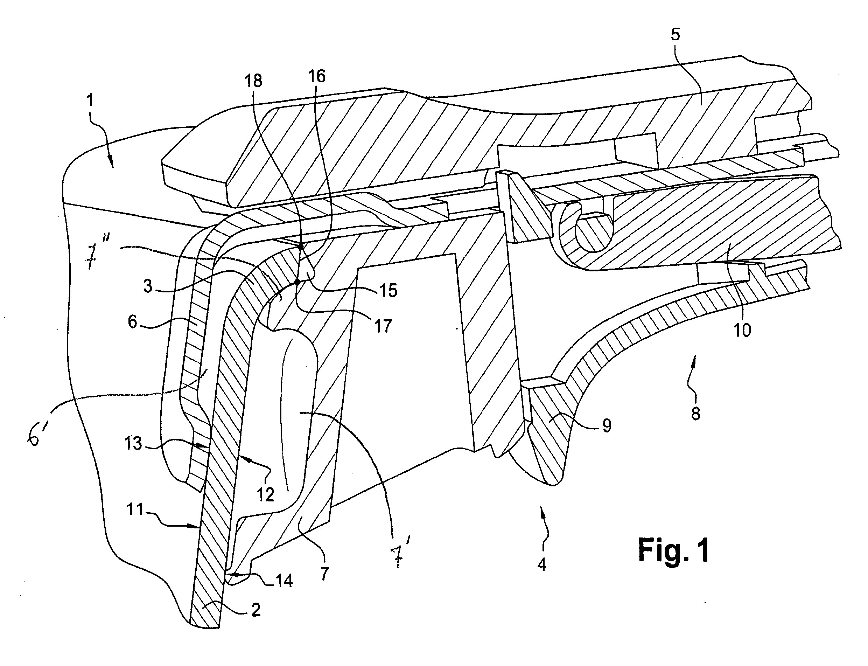

Il y a ainsi au moins trois zones de contact entre la poignée 4 et l'article culinaire 1 : une première entre la surface intérieure 11 de la paroi latérale 2 et la surface de serrage 13 de la mâchoire interne 6 de la poignée 4, une seconde entre la surface extérieure 12 de la paroi latérale 2 et la surface de serrage 14 de la mâchoire externe 7 de la poignée 4, et une troisième entre l'extrémité libre 16 de la portion recourbée 3 prolongeant la paroi latérale 2 et la rainure 15 réalisée dans la mâchoire externe 7 de la poignée 4. Les deux premières zones de contact sont agencées sensiblement sur une génératrice verticale de la paroi latérale 2 de l'article culinaire 1. Plus particulièrement, sont localisées sur cette génératrice verticale, la première zone de contact sur la génératrice verticale à un niveau inférieur par rapport à un axe vertical défini par la génératrice et la deuxième zone de contact à un niveau intermédiaire sur ledit axe vertical. De plus, la troisième zone de contact, non située sur cette génératrice verticale, est située à un niveau supérieur par rapport au niveau intermédiaire, le long de l'axe vertical défini par cette génératrice. En d'autres termes, la poignée 4 et l'article culinaire 1 sont en contact uniquement en des zones localisées 13, 14 et sont au moins au nombre de deux en plus des zones de contact des arêtes externe 17 et interne 18 avec la rainure 15. Les profils des deux premières zones de contact sont sensiblement linéaires. Leurs surfaces sont de quelques mm². Avantageusement, afin de limiter la surface des zones de contact, sont représentées figure 1 : une cavité 7' située dans la mâchoire externe 7 de la poignée 4, entre la surface de serrage 14 de la mâchoire externe 7 et la rainure 15, une cavité 6' située dans la mâchoire interne 6 de la poignée 4, s'étendant de la surface de serrage 13 de la mâchoire interne 6 d'une part et au delà de la rainure 15 d'autre part, et une saillie 7" entre la rainure 15 et la cavité 7' les séparant, de façon à accueillir de manière optimale l'extrémité libre 16 de la portion recourbée 3.En conséquence les trois zones de contact sont localisées, c'est-à-dire qu'elles présentent des surfaces limitées, non continues sur la hauteur des surfaces interne 11 et externes 12 de la paroi latérale 2. Ceci implique l'existence des cavités.

La rainure 15 s'étend longitudinalement selon la tangente horizontale prise sur la paroi latérale 2 (ou la portion recourbée 3) de l'article culinaire 1 pincé (ici, la rainure 15 s'étend longitudinalement perpendiculairement à la direction de translation de la mâchoire mobile 6). La rainure 15 s'étend sur toute la largeur de la mâchoire externe 7 (typiquement entre 20 et 40 mm, voire plus).

Cette rainure 15 est conformée de façon à recevoir en butée, quand les mâchoires 6, 7 sont dans leur position fermée, les arêtes externe 17 et interne 18 délimitant l'épaisseur de l'extrémité libre 16 de la portion recourbée 3.

En utilisation, quand l'utilisateur entraîne les moyens de déplacement 8 (ici, le levier 9) de leur position d'ouverture à leur position de fermeture, les mâchoires 6, 7 passent de leur position ouverte à une position fermée en passant par une position de contact à partir de la quelle la paroi latérale 2 est en contact avec les deux mâchoires 6, 7.

A partir de cette position, la surface de serrage 13 de la mâchoire interne 6 presse la paroi latérale 3 contre la surface de serrage 14 de la mâchoire externe 7 et, simultanément entraîne l'extrémité libre 16 de la portion recourbée 3 (pouvant par ailleurs être déjà dans la rainure 15), au fond de la rainure 15 jusqu'à ce qu'elle y vienne en butée et forme la troisième zone de contact (de façon plus précise, jusqu'à ce que les deux arêtes 17, 18 délimitant l'extrémité libre 16 viennent en butée contre la rainure 15).

La force de serrage pour le pincement de l'article culinaire 1 est comparable à celle de poignées de l'art antérieur, et elle est typiquement comprise entre 100 et 200 N.

Ici, afin de pouvoir être utilisé quelle que soit l'épaisseur de l'extrémité libre 16 de la portion recourbée 3, le profil de l'extrémité de la rainure 15, en direction de son fond, est en forme de V. Ainsi, plus l'extrémité libre 16 est fine, plus elle pénètre profondément dans la rainure 15 en étant plaquée contre le fond de cette dernière. En d'autres termes, la rainure 15 possède de préférence une forme évasée vers l'extérieur. Elle sera ainsi favorablement apte à bloquer tout mouvement de translation au moins vertical de l'extrémité libre 16 lorsque les arêtes externe (17) et interne (18) délimitant l'épaisseur de l'extrémité libre (16) de la portion recourbée (3) sont reçues en butée dans la rainure 15 et ce quelle que soit son épaisseur évitant ainsi l'existence d'un jeu.

Par ailleurs, l'article culinaire 1 possède un certain diamètre qui correspond aux courbures respectives de sa paroi latérale 2 et de sa portion recourbée 3. Les mâchoires 6, 7 (plus précisément, les surfaces de serrage 13, 14 des mâchoires 6, 7 et la rainure 15 de la mâchoire externe 7) peuvent également posséder une courbure non nulle, et la courbure de la rainure 15 peut être différente de celle de la surface de serrage 14 de la mâchoire externe 7.

Quand la courbure de la rainure 15 est plus petite que celle de la portion recourbée 3 de l'article culinaire 1 pincé, l'extrémité libre 16 de la portion recourbée 3 vient en contact en une seule zone sensiblement dans le même plan que les deux zones de contact formées par les deux surface de serrage 13, 14 (plus précisément, en deux points très proches correspondant aux contacts réalisés par les arêtes externe 17 et interne 18 délimitant l'extrémité libre 16 de la portion recourbée 3). Dans un tel cas, il peut subsister un jeu de pivotement entre l'article culinaire 1 et la poignée amovible 4 selon le plan vertical passant par ces trois zones de contact.

Au contraire, quand la courbure de la rainure 15 est plus grande que celle de la portion recourbée 3 de l'article culinaire 1 pincé, l'extrémité libre 16 de la portion recourbée 3 vient en contact en deux zones horizontalement écartées l'une de l'autre qui sont disposés sensiblement aux deux extrémités longitudinales de la rainure 3 (plus précisément, en quatre points très proches deux à deux, correspondant aux contacts réalisés par les arêtes externe 17 et interne 18 délimitant l'extrémité libre 16 de la portion recourbée 3). Dans un tel cas, il y a quatre zones de contact non coplanaires, ce qui empêche tout jeu de pivotement.

Il est également possible que la courbure de la rainure 15 soit égale à celle de la portion recourbée 3 de l'article culinaire 1 pincé, auquel cas l'extrémité libre 16 de la portion recourbée 3 vient en contact linéaire sur toute la longueur de la rainure 15, ce qui empêche également tout jeu de pivotement.

La présente invention n'est pas limitée au mode de réalisation précédemment décrit. Il serait possible que la poignée présente des moyens de déplacement différents, ou qu'elle présente alternativement ou cumulativement des moyens rendant stable les positions ouverte et fermée des mâchoires, des moyens empêchant une ouverture soudaine et imprévue des mâchoires malgré la nature stable de leur position fermée, des moyens de désactivation des moyens qui empêchent l'ouverture soudaine et imprévue des mâchoires, des moyens permettant d'avoir un ajustement de la position fermée des mâchoires à l'épaisseur de la paroi latérale de l'article culinaire pincé, et/ou des moyens maintenant les mâchoires immobiles en position fermée ajustée à l'épaisseur de la paroi latérale de l'article culinaire.

## Revendications

1. Poignée amovible (4) pour article culinaire (1) ayant une paroi latérale (2) qui est prolongée vers le haut par une portion recourbée (3) vers l'extérieur, la poignée (4) comprenant une mâchoire interne (6) et une mâchoire externe (7) adaptées à venir contre, respectivement, les surfaces intérieure (11) et extérieure (12) de la paroi latérale (2) de l'article culinaire (1), les deux mâchoires (6, 7) étant mobiles l'une par rapport à l'autre entre une position ouverte et une position fermée dans laquelle elles pincent la paroi latérale (2), la mâchoire externe (7) comportant une rainure (15) adaptée à recevoir en butée l'extrémité libre (16) de la portion recourbée (3) de la paroi latérale (2) de l'article culinaire (1) quand les mâchoires (6, 7) sont dans leur position fermée, **caractérisée en ce que** ladite rainure (15) est conformée de façon à recevoir en butée, quand les mâchoires (6, 7) sont dans leur position fermée, les arêtes externe (17) et interne (18) délimitant l'épaisseur de l'extrémité libre (16) de la paroi latérale (2) à l'endroit de ladite portion recourbée (3).

2. Poignée amovible (4) selon la revendication 1, **caractérisée en ce que** la rainure (15) présente une forme évasée vers l'extérieur apte à bloquer la portion recourbée (3) de la paroi latérale (2) de l'article culinaire (1) quelle que soit l'épaisseur de ladite portion recourbée (3).

3. Poignée amovible (4) selon l'une quelconque des revendications 1 ou 2, **caractérisée en ce que** le profil de l'extrémité de la rainure (15) en direction de son fond est en forme de V.

4. Poignée amovible (4) selon l'une des revendications 1 à 3, **caractérisée en ce que** la mâchoire externe (7) est fixe par rapport au corps de préhension (5) de la poignée (4).

5. Poignée amovible (4) selon l'une des revendications 1 à 4, **caractérisée en ce que** la mâchoire interne (6) est montée en translation selon la direction longitudinale du corps de préhension (5) de la poignée (4).

6. Poignée amovible (4) selon l'une des revendications 1 à 5, **caractérisée en ce que** la poignée (4) et l'article culinaire (1) sont en contact uniquement en des zones localisées (13, 14) et sont au moins au nombre de deux en plus des zones de contact des arêtes externe (17) et interne (18) avec la rainure (15).

7. Poignée (4) selon l'une des revendications 1 à 6, **caractérisée en ce que** les contacts (13, 14) de la mâchoire interne (6) et de la mâchoire externe (7) contre, respectivement, les surfaces intérieure (11) et extérieure (12) de la paroi latérale (2) de l'article culinaire (1) présentent chacun une surface de quelques mm².

8. Poignée amovible (4) et article culinaire (1) ayant une paroi latérale (2) qui est prolongée vers le haut par une portion recourbée (3) vers l'extérieur, laquelle se termine par une extrémité libre (16) définie par des arêtes externe (17) et interne (18) de ladite paroi latérale qui délimitent l'épaisseur de cette paroi latérale (2) à l'endroit de ladite portion recourbée (3), la poignée (4) comprenant une mâchoire interne (6) et une mâchoire externe (7) venant contre, respectivement, les surfaces intérieure (11) et extérieure (12) de la paroi latérale (2) de l'article culinaire (1), les deux mâchoires (6, 7) étant mobiles l'une par rapport à l'autre entre une position ouverte et une position fermée dans laquelle elles pincent la paroi latérale (2), la mâchoire externe (7) comportant une rainure (15) recevant en butée l'extrémité libre (16) de la portion recourbée (3) de la paroi latérale (2) de l'article culinaire (1) quand les mâchoires (6, 7) sont dans leur position fermée, **caractérisés en ce que** ladite rainure (15) reçoit en butée, quand les mâchoires (6, 7) sont dans leur position fermée, les arêtes externe (17) et interne (18) de la portion recourbée (3) de ladite paroi latérale (2) qui se termine vers l'extérieur.

9. Poignée amovible (4) et article culinaire selon la revendication 8 **caractérisée en ce que** la poignée est celle selon l'une quelconque des revendications 2 à 7.

## Patentansprüche

1. Entfernbarer Griff (4) für einen Kochgegenstand (1) mit einer Seitenwand (2), die durch einen nach außen gekrümmten Abschnitt (3) nach oben verlängert ist, wobei der Griff (4) eine innere Backe (6) und eine äußere Backe (7) umfasst, die geeignet sind, an der Innenfläche (11) bzw. der Außenfläche (12) der Seitenwand (2) des Kochgegenstands (1) anzuliegen, wobei die beiden Backen (6, 7) bezüglich einander zwischen einer geöffneten Position und einer geschlossenen Position, in der sie die Seitenwand (2) einklemmen, beweglich sind, wobei die äußere Backe (7) eine Nut (15) umfasst, die geeignet ist, das freie Ende (16) des gekrümmten Abschnitts (3) der Seitenwand (2) des Kochgegenstands (1) anliegend aufzunehmen, wenn die Backen (6, 7) in ihrer geschlossenen Position sind, **dadurch gekennzeichnet, dass** die Nut (15) so angepasst ist, dass sie den äußeren (17) und den inneren Rand (18), die die Dicke des freien Endes (16) der Seitenwand (2) an der Stelle des gekrümmten Abschnitts (3) begrenzen, anliegend aufnimmt, wenn die Backen (6, 7) in ihrer geschlossenen Position sind.

2. Entfernbarer Griff (4) nach Anspruch 1, **dadurch gekennzeichnet, dass** die Nut (15) eine nach außen aufgeweitete Form aufweist, die geeignet ist, den gekrümmten Abschnitt (3) der Seitenwand (2) des Kochgegenstands (1) unabhängig von der Dicke des gekrümmten Abschnitts (3) zu arretieren.

3. Entfernbarer Griff (4) nach Anspruch 1 oder 2, **dadurch gekennzeichnet, dass** das Profil des Endes der Nut (15) zu ihrem Boden hin V-förmig ist.

4. Entfernbarer Griff (4) nach einem der Ansprüche 1 bis 3, **dadurch gekennzeichnet, dass** die äußere Backe (7) bezüglich des Greifkörpers (5) des Griffs (4) feststeht.

5. Entfernbarer Griff (4) nach einem der Ansprüche 1 bis 4, **dadurch gekennzeichnet, dass** die innere Backe (6) gemäß der Längsrichtung des Greifkörpers (5) des Griffs (4) translatorisch montiert ist.

6. Entfernbarer Griff (4) nach einem der Ansprüche 1 bis 5, **dadurch gekennzeichnet, dass** der Griff (4) und der Kochgegenstand (1) nur an stellenweisen Bereichen (13, 14) in Kontakt sind, bei denen es sich, außer den Kontaktbereichen des äußeren (17) und des inneren Rands (18) mit der Nut (15), um höchstens zwei handelt.

7. Entfernbarer Griff (4) nach einem der Ansprüche 1 bis 6, **dadurch gekennzeichnet, dass** die Kontakte (13, 14) der inneren Backe (6) und der äußeren Backe (7) mit der Innenfläche (11) bzw. Außenfläche (12) der Seitenwand (2) des Kochgegenstands (1) jeweils eine Fläche von einigen mm² haben.

8. Entfernbarer Griff (4) und Kochgegenstand (1) mit einer Seitenwand (2), die durch einen nach außen gekrümmten Abschnitt (3) nach oben verlängert ist, der mit einem freien Ende (16) endet, das durch einen äußeren (17) und einen inneren Rand (18) der Seitenwand definiert ist, die die Dicke dieser Seitenwand (2) an der Stelle des gekrümmten Abschnitts (3) begrenzen, wobei der Griff (4) eine innere Backe (6) und eine äußere Backe (7) umfasst, die an der Innenfläche (11) bzw. der Außenfläche (12) der Seitenwand (2) des Kochgegenstands (1) anliegen, wobei die beiden Backen (6, 7) bezüglich einander zwischen einer geöffneten Position und einer geschlossenen Position, in der sie die Seitenwand (2) einklemmen, beweglich sind, wobei die äußere Backe (7) eine Nut (15) umfasst, die das freie Ende (16) des gekrümmten Abschnitts (3) der Seitenwand (2) des Kochgegenstands (1) anliegend aufnimmt, wenn die Backen (6, 7) in ihrer geschlossenen Position sind, **dadurch gekennzeichnet, dass** die Nut (15) den äußeren (17) und den inneren Rand (18) des gekrümmten Abschnitts (3) der Seitenwand (2), der nach außen endet, anliegend aufnimmt, wenn die Backen (6, 7) in ihrer geschlossenen Position sind.

9. Entfernbarer Griff (4) und Kochgegenstand nach Anspruch 8, **dadurch gekennzeichnet, dass** der Griff derjenige nach einem der Ansprüche 2 bis 7 ist.

## Claims

1. Removable handle (4) for a kitchen accessory (1) having a lateral wall (2) that is extended upwardly by an outwardly curved portion (3), in which the handle (4) includes an internal jaw (6) and an external jaw (7) suitable for abutting the internal (11) and external (12) surfaces, respectively, of the lateral wall (2) of the kitchen accessory (1), in which the two jaws (6, 7) are mobile one with respect to the other between an open position and a closed position in which they clamp the lateral wall (2), and the external jaw (7) comprises a groove (15) suitable for receiving, in abutment, the free end (16) of the curved portion (3) of the lateral wall (2) of the kitchen accessory (1) when the jaws (6, 7) are in their closed position, **characterized in that** said groove (15) is shaped so as to receive, in abutment, when the jaws (6, 7) are in their closed position, the external (17) and internal (18) edges defining the thickness of the free end (16) of the lateral wall (2) at the location of said curved portion (3).

2. Removable handle (4) according to claim 1, **characterized in that** the groove (15) has an outwardlyflared shape capable of blocking the curved portion (3) of the lateral wall (2) of the kitchen accessory (1) regardless of the thickness of said curved portion (3).

3. Removable handle (4) according to either one of claims 1 or 2, **characterized in that** the profile of the end of the groove (15) in the direction of its base has a V shape.

4. Removable handle (4) according to one of claims 1 to 3, **characterized in that** the external jaw (7) is stationary with respect to the grip body (5) of the handle (4).

5. Removable handle (4) according to one of claims 1 to 4, **characterized in that** the internal jaw (6) is mounted in translation according to the longitudinal direction of the grip body (5) of the handle (4).

6. Removable handle (4) according to one of claims 1 to 5, **characterized in that** the handle (4) and the kitchen accessory (1) are in contact only in localized areas (13, 14) and the localized areas (13, 14) are at least two in addition to the areas of contact of the external (17) and internal (18) edges and the groove (15).

7. Removable handle (4) according to one of claims 1 to 6, **characterized in that** the contacts (13, 14) of the internal jaw (6) and the external jaw (7) against the internal (11) and external (12) surfaces, respectively, of the lateral wall (2) of the kitchen accessory (1) each have a surface of several mm².

8. Removable handle (4) and kitchen accessory (1) having a lateral wall (2) that is extended upwardly by an outwardly curved portion (3), which ends in a free end (16) defined by external (17) and internal (18) edges of said side wall defining the thickness of the lateral wall (2) at the location of said curved portion (3), the handle (4) includes an internal jaw (6) and an external jaw (7) abutting the internal (11) and external (12) surfaces, respectively, of the lateral wall (2) of the kitchen accessory (1), the two jaws (6, 7) are mobile one with respect to the other between an open position and a closed position in which they clamp the lateral wall (2), and the external jaw (7) comprises a groove (15) receiving, in abutment, the free end (16) of the curved portion (3) of the lateral wall (2) of the kitchen accessory (1) when the jaws (6, 7) are in their closed position, **characterized in that** said groove (15) receives, in abutment, when the jaws (6, 7) are in their closed position, the external (17) and internal (18) edges of the curved portion (3) of said lateral wall (2) which ends outwardly.

9. Removable handle (4) and kitchen accessory according to claim 8, **characterized in that** the handle is as described in any one of claims 2 to 7.
